# EUROPÄISCHE PATENTSCHRIFT

(11) **EP 2 738 045 B1**
(45) Veröffentlichungstag und Bekanntmachung des Hinweises auf die Patenterteilung: **11.02.2015**
(21) Anmeldenummer: 13004147.8
(22) Anmeldetag: 22.08.2013
(51) Int. Cl.: H02G 3/04, H02G 3/00, H02G 3/34, H02G 3/32

(54) **Befestigungsvorrichtung**
Attachment device
Dispositif de fixation

(30) Priorität: 01.12.2012 DE 102012023570
(43) Veröffentlichungstag der Anmeldung: 04.06.2014
(73) Patentinhaber: MAN Truck & Bus AG, 80995 München (DE)
(72) Erfinder: Gessner, Johannes, 80337 München (DE); Bachfisch, Roland, 81541 München (DE); Horvat, Michael, 80993 München (DE); Jarschel, Frank, 85229 Markt Indersdorf (DE)

(56) Entgegenhaltungen:
- EP-A1- 1 107 413
- EP-A1- 2 424 748
- EP-A2- 1 201 980
- US-A- 5 730 400
- US-A1- 2007 044 988

## Beschreibung

### Bereich der Erfindung

Die vorliegende Erfindung betrifft eine Befestigungsvorrichtung, die an einem Träger befestigt werden kann und ein System umfassend eine Befestigungsvorrichtung und einen Träger, an dem die Befestigungsvorrichtung anbringbar ist.

### Hintergrund der Erfindung

Aus dem Stand der Technik sind Befestigungsvorrichtungen bekannt, die dafür vorgesehen sind, Anbau- oder Verkleidungsabschnitte an einem Träger oder Rohr eines Fahrzeugs anzubringen. Hierfür wird ein Loch sowohl in den Anbau- oder Verkleidungsabschnitt als auch in den Träger gebohrt. Beim Bohren des Lochs in den Träger besteht die Gefahr, dass eine zuvor an dem Träger angebrachte Beschichtung, die dem Korrosionsschutz dient, beschädigt wird und der Träger, der meistens aus einem Metall besteht, deswegen der Korrosion ausgesetzt sein kann. Ferner wird die Befestigungsvorrichtung durch das Loch des Anbau- oder Verkleidungsabschnitts in das Loch des Trägers geschoben, wobei die Spitze der Befestigungsvorrichtung sich aufspreizt. Somit ist der Anbau- oder Verkleidungsabschnitt an dem Träger fixiert. Eine derartige Befestigungsvorrichtung ist deswegen nachteilig, weil die Befestigungsvorrichtung bei der Demontage meistens beschädigt wird und dadurch nicht mehr zum erneuten Befestigen eines Anbau- oder Verkleidungsabschnitts an einem Träger verwendet werden kann. Ferner ist die Befestigungsvorrichtung von außen sichtbar, wodurch das äußere Erscheinungsbild beeinträchtigt wird.

Eine weitere Möglichkeit der Befestigung eines Anbau- oder Verkleidungsabschnitts an einem Träger ist das Aufkleben der Anbau- oder Verkleidungsabschnitte auf den Träger. Für den Fall, dass weitere Elemente wie zum Beispiel Kabel an dem Träger angebracht werden sollen, werden diese ebenfalls angeklebt oder lose zwischen dem Anbau- oder Verkleidungsabschnitt und dem Träger geführt.

Insbesondere das Anbringen durch Verkleben ist nachteilig, weil es beim Kleben schwierig ist, die Position des Anbau- oder Verkleidungsabschnitts oder des Kabels genau zu definieren. Überdies besteht auch die Gefahr, dass die Anbau- oder Verkleidungsabschnitte oder die Kabel verrutschen. Ferner ist eine zerstörungsfreie Demontage ebenfalls nicht gegeben.

Aus der US 2007/0044988 A1 ist eine Befestigungsvorrichtung gemäß Oberbegriff von Anspruch 1, insbesondere ist ein aus Metall gefertigtes Kabelkanalsystem bekannt, das einen umschlossenen Hohlraum zur Kabelführung ausbildet und an dessen Unterseite sich zwei gekrümmte nach außen erstreckende Kupplungsvorsprünge befinden, um das Kabelkanalsystem an einem Träger zu befestigen. Aus der EP 1 201 980 A2 ist ferner eine Vorrichtung zur Halterung von Gebäudeleitungen, und -kabeln bekannt, bei der eine Blechabdeckung auf einem Kragträger gehaltert ist. Auch dieser Stand der Technik bietet keine zufriedenstellende Lösung, um eine Befestigungsvorrichtung sowohl schnell an einem Träger anbringen zu können als auch einfach Anbau- oder Verkleidungsabschnitte an der Befestigungsvorrichtung anbringen zu können.

Daher ist es eine Aufgabe der vorliegenden Erfindung die zuvor bezeichneten Nachteile zu lösen. Insbesondere ist es eine Aufgabe der vorliegenden Erfindung eine Befestigungsvorrichtung bereitzustellen, die einfach und sicher an einem Träger angebracht werden kann, multifunktional einsetzbar ist und dennoch kostengünstig ist.

### Zusammenfassung der Erfindung

Gelöst wird die Aufgabe durch eine Befestigungsvorrichtung mit einem Mittelabschnitt und zwei Seitenabschnitten, die sich jeweils von den beiden Enden des Mittelabschnitts erstrecken und dazu ausgebildet sind, einen Träger, an dem die Befestigungsvorrichtung anbringbar ist, zumindest teilweise zu umfassen. Ferner umfasst die Befestigungsvorrichtung Mittel zum Befestigen der Befestigungsvorrichtung an dem Träger, Mittel zum Aufnehmen mindestens eines Kabels, das an dem Träger geführt wird, und Mittel zum Aufnehmen mindestens eines Anbau- oder Verkleidungsabschnitts, der die Befestigungsvorrichtung zumindest teilweise umgibt.

Der Mittelabschnitt und die Seitenabschnitte der Befestigungsvorrichtung sind vorzugsweise plattenförmig ausgebildet und weisen jeweils eine Innenfläche bzw. eine dem Träger zugewandte Fläche auf und eine Außenfläche bzw. eine dem Träger abgewandte Fläche auf. An jedem der radial außen liegenden Enden des Mittelabschnitts der Befestigungsvorrichtung sind die Seitenabschnitte angeordnet, die sich im Wesentlichen orthogonal von dem Mittelabschnitt erstrecken können, sodass in Draufsicht die Befestigungsvorrichtung u-förmig ausgebildet sein kann. Die Seitenabschnitte selber können federnd nachgiebig sein und/oder federnd nachgiebig gegenüber dem Mittelabschnitt ausgebildet sein. Die Höhe der Befestigungsvorrichtung, d.h. die Länge von der unteren Kante bis zur oberen Kante der Befestigungsvorrichtung, ist vorzugsweise über die Befestigungsvorrichtung konstant.

Erfindungsgemäß weist die Befestigungsvorrichtung Mittel zum Befestigen der Befestigungsvorrichtung an einem Träger auf. Diese Mittel sind dafür vorgesehen, eine insbesondere lösbare Verbindung zwischen der Befestigungsvorrichtung und dem Träger erzeugen zu können. Bevorzugt bewirken die Mittel einen Reib- und/oder Formschluss zwischen der Befestigungsvorrichtung und dem Träger. Vorzugsweise sind derartige Mittel Schnapp-, Klick- oder Rastvorrichtungen. Hierbei kann die Befestigungsvorrichtung eine Rastnase oder einen Vorsprung aufweisen und der Träger ein Loch oder eine Hinterschneidung, in die die Rastnase oder der Vorsprung eingeklickt, eingesetzt oder eingerastet werden kann. Es ist nicht ausgeschlossen, dass die Rastnase oder der Vorsprung an dem Träger und das Loch oder die Hinterschneidung an der Befestigungsvorrichtung angeordnet sind. Die Rastnase kann eckig, länglich, oval oder kreisrund sein, wobei eine kreisrunde Rastnase beim Einrasten in das Loch des Trägers von Vorteil ist, da aufgrund der Passgenauigkeit die Befestigungsvorrichtung spielfrei an dem Träger befestigt werden kann. Die Rastnase kann an dem Mittelabschnitt oder an einem oder beiden Seitenabschnitten angeordnet sein. Besonders bevorzugt ist eine Rastnase an jeder dem Träger zugewandten Fläche der Seitenabschnitte der Befestigungsvorrichtung positioniert, die in entsprechende Löcher an dem Träger eingerastet werden. Somit können sich die federnd nachgiebigen Seitenabschnitte, an denen die Rastnasen innenliegend angeordnet sind, beim Aufschieben der Befestigungsvorrichtung auf den Träger aufspreizen, bevor die Rastnasen in die entsprechenden Löcher im Träger einrasten, wodurch eine sichere Befestigung der Befestigungsvorrichtung an dem Träger gewährleistet werden kann, insbesondere spielfrei.

Ferner weist die Befestigungsvorrichtung Mittel zum Aufnehmen mindestens eines Anbau- oder Verkleidungsabschnitts auf, die mindestens eine Aufnahme aufweisen, die an der nach außen gerichteten Fläche an jedem der Seitenabschnitte angeordnet ist. Hierbei ist die Aufnahme oder der Schlitz zum Aufnehmen eines Teils des Anbau- oder Verkleidungsabschnitts, um diesen an der Befestigungsvorrichtung zu fixieren, im Wesentlichen orthogonal zur jeweiligen nach außen gerichteten Fläche der Seitenabschnitte angeordnet.

In die Aufnahme kann ein Teil des Anbau- oder Verkleidungsabschnitts eingeschoben oder eingesteckt werden. Insbesondere können die Mittel einen Schlitz umfassen, der sich entlang der Längsachse der Befestigungsvorrichtung erstreckt. Die Längsachse ist diejenige Achse, die sich entlang der Mittellinie des Mittelabschnitts der Befestigungsvorrichtung erstreckt. In den Schlitz kann ein von dem Verkleidungsabschnitt senkrecht nach innen abragender Einsteckabschnitt eingeschoben werden. Der Verkleidungsabschnitt kann die Befestigungsvorrichtung insbesondere vollständig abdecken und u-förmig ausgebildet sein.

Vorteilhaft ist, wenn die Mittel zum Aufnehmen eines Anbau- oder Verkleidungsabschnitts einen angeschrägten Abschnitt aufweisen, der sich in Aufschieberichtung des Anbau- oder Verkleidungsabschnitts vor der Aufnahme oder dem Schlitz befindet und sich aufweitet bevor der angeschrägte Abschnitt in der Aufnahme oder dem Schlitz endet. Beim Aufschieben des Anbau- oder Verkleidungsabschnitts auf die Befestigungsvorrichtung werden die Einsteckabschnitte an den angeschrägten Abschnitten der Befestigungsvorrichtung aufgespreizt, bevor die Einsteckabschnitte in die Aufnahmen oder Schlitze der Befestigungsvorrichtung einrasten, wodurch ein Monteur eine akustische Rückmeldung erhält als Bestätigung der ordnungsgemäßen Montage des Anbau- oder Verkleidungsabschnitts.

In einem Ausführungsbeispiel, in dem die Befestigungsvorrichtung u-förmig ausgebildet ist, ist der Verkleidungsabschnitt ebenfalls im Wesentlichen u-förmig ausgebildet und umfasst die auf den Träger aufgeschobene und verrastete Befestigungsvorrichtung, insbesondere vollständig. Hierbei können die Einsteckabschnitte in die Schlitze der Mittel zum Aufnehmen eines Anbau- oder Verkleidungsabschnitts eingeschoben werden, die sich jeweils an den Flächen der Seitenabschnitte befinden, die sich auf der vom Träger abgewandten Seite befinden. Dadurch wird die Befestigungsvorrichtung und der Träger von dem Verkleidungsabschnitt verdeckt, insbesondere vollständig, sodass die Befestigungsvorrichtung von außen nicht sichtbar ist. Besonders bevorzugt liegt der Verkleidungsabschnitt auch an den Ecken der Befestigungsvorrichtung zwischen dem Mittelabschnitt und den Seitenabschnitten auf, um den Verkleidungsabschnitt in den Eckbereichen zu stabilisieren und um gegebenenfalls ein Eindrücken der Eckbereiche des Verkleidungsabschnitts durch eine Einwirkung von außen zu verhindern. Ferner können weitere Bereiche der Befestigungsvorrichtung zur Stabilisierung des die Befestigungsvorrichtung umgebenden Verkleidungsabschnitts vorhanden sein. Zum Beispiel können auch die Mittel zum Aufnehmen von Kabeln stabilisierend wirken, auf die nachfolgend näher eingegangen wird.

Ferner weist die Befestigungsvorrichtung Mittel zum Aufnehmen mindestens eines Kabels auf. Diese Mittel können an dem Mittelabschnitt und/oder einem oder beiden Seitenabschnitten angebracht werden. Die Mittel umfassen eine oder mehrere Aufnahmen, die das Kabel oder die Kabel entlang der Längsachse der Befestigungsvorrichtung führen. Vorteilhafterweise ist die Aufnahme an dem Mittelabschnitt angeordnet. Die Aufnahme kann an der dem Träger zugewandten Fläche oder der dem Träger abgewandten Fläche des Mittelabschnitts angeordnet sein. Bevorzugt wird die Aufnahme von mindestens zwei parallel verlaufenden, beabstandeten Stegen gebildet, die einen Zwischenraum bilden und vom Mittelabschnitt von der dem Träger abgewandten Fläche abragen. Die Stege sind im Wesentlichen orthogonal zu der Fläche des Mittelabschnitts positioniert. Zwischen den beiden Stegen können ein oder mehrere Kabel geführt werden. An dem dem Mittelabschnitt gegenüberliegenden Ende des Stegs bzw. an dem freien Ende des Stegs kann der Steg in Richtung des benachbarten Stegs einen abgewinkelten Fortsatz aufweisen, der das Kabel in dem Zwischenraum am Herausrutschen hindern kann.

In einem weiteren Ausführungsbeispiel sind an dem Mittelabschnitt drei Stege angeordnet, die parallel zueinander und beabstandet voneinander angeordnet sind. In den jeweiligen Zwischenräumen können mehrere Kabel geführt werden.

Die Befestigungsvorrichtung ist besonders vorteilhaft, da nicht nur ein Verkleidungsabschnitt sondern auch Kabel an der Befestigungsvorrichtuhg derart angebracht werden können, dass diese in der vorgesehenen Position vorliegen ohne zu verrutschen. Ferner dient die Befestigungsvorrichtung bzw. die Ecken und die Mittel zum Aufnehmen von Kabeln als Stütze für den Verkleidungsabschnitt, der an der Befestigungsvorrichtung befestigt ist, sodass diese Auflageflächen für den Verkleidungsabschnitt stabilisierend wirken, um ein Eindrücken durch eine von außen einwirkende Kraft zu verhindern. Überdies erfolgt sowohl beim Einrasten der Befestigungsvorrichtung in dem Loch des Trägers als auch beim Aufschieben und Einrasten des Verkleidungsabschnitts an der Befestigungsvorrichtung eine akustische Rückmeldung an den Monteur, sodass dieser die Teile sicher anbringen kann und die Gefahr einer fehlerhaften Montage reduziert werden kann.

Ferner betrifft die Erfindung ein System mit einer Befestigungsvorrichtung, wie sie vorangehend beschrieben ist, und einen Träger, der mittels Rast- oder Schnappverbindung an dem Träger anbringbar ist. Bevorzugt ist der Träger ein Teil einer Karosserie oder eines Karosseriegerippes eines Fahrzeugs, wie zum Beispiel eines Busses und kann ein Rohr oder Stab sein, das bzw. der rund, mehreckig oder viereckig ausgebildet sein kann. Besonders bevorzugt als Träger ist ein hohles Vier-Kant-Rohr mit vier Seitenflächen. Die Befestigungsvorrichtung kann derart ausgebildet sein, dass sie sich im Wesentlichen der Form des Trägers anpasst, um ein zu großes Spiel zwischen dem Träger und der Befestigungsvorrichtung und damit eine Bewegung der Befestigungsvorrichtung relative zu dem Träger zu vermeiden. Wenn die Befestigungsvorrichtung u-förmig ausgebildet ist, kann die Befestigungsvorrichtung derart an dem Träger befestigt sein, dass drei der Seitenflächen des Trägers von der Befestigungsvorrichtung zumindest teilweise umgeben oder umklammert werden.

In einem Ausführungsbeispiel ist der Träger vorbehandelt worden. Der Träger kann vor der Anbringung der Befestigungsvorrichtung mittels kathodischer Tauchlackierung (KTL) beschichtet werden. Dieses Verfahren dient dem Korrosionsschutz des Trägers. Hierbei wird der Träger in ein Tauchbad eingeführt und wieder herausgezogen. Bevor dieses Verfahren angewendet wird, werden Löcher in den Träger gebohrt, gestanzt oder gelasert aus denen die Flüssigkeit der kathodischen Tauchlackierung (KTL) beim Herausziehen des Trägers aus dem Tauchbad wieder heraus fließen kann (Ablaufbohrung). Besonders bevorzugt verrastet die Rastnase der Befestigungsvorrichtung in einem dieser Löcher, die vor dem Verfahren der kathodischen Tauchlackierung (KTL) in den Träger gebohrt wurden.

Die Verwendung der Löcher, die vor dem Beschichtungsverfahren an dem Träger angebracht werden, hat den Vorteil, dass beim Anbringen der Befestigungsvorrichtung an dem Träger die vorhanden Löcher aus dem Beschichtungsverfahren verwendet werden können und keine zusätzlichen Löcher in den Träger gebohrt, gestanzt oder gelasert werden müssen. Somit kann insgesamt die Produkterstellungszeit verkürzt werden. Ferner ist es von Vorteil, dass die Beschichtung des Trägers, die durch die kathodische Tauchlackierung (KTL) aufgebracht wird zum Schutz des Trägers vor Korrosion, nicht durch ein nachträgliches Erstellen eines Lochs an dem Träger zum Anbringen der Befestigungsvorrichtung beschädigt wird. Es ist beim Bohren, Stanzen oder Lasern eines Lochs nahezu unmöglich, ein Loch herzustellen ohne die Beschichtung zumindest am Lochumfang zu beschädigen, sodass an dieser Stelle kein Korrosionsschutz mehr vorhanden ist. Durch die Verwendung der Löcher, die vor dem Beschichtungsverfahren erstellt wurden, kann diese Beschädigung des Korrosionsschutzes vermieden werden.

Vorzugsweise besteht die Befestigungsvorrichtung aus Thermoplasten und wird durch ein Spritzgussverfahren hergestellt.

Nachfolgend werden Ausführungsbeispiele der Erfindung anhand von Figuren erläutert. An den Ausführungsbeispielen offenbar werdende Merkmale bilden je einzeln und in jeder Merkmalskombination die Gegenstände der Ansprüche und auch die vorstehend beschriebenen Ausgestaltungen vorteilhaft weiter.

### KURZBESCHREIBUNG DER ZEICHNUNGEN

Figur 1 zeigt eine Befestigungsvorrichtung in perspektivischer Ansicht.
Figur 2 eine Schnittansicht der Befestigungsvorrichtung des Trägers und des die Befestigungsvorrichtung umgebenden Verkleidungsabschnitts.
Figur 3 zeigt eine perspektivische Ansicht des Trägers mit angebrachter Befestigungsvorrichtung.

### AUSFÜHRLICHE BESCHREIBUNG

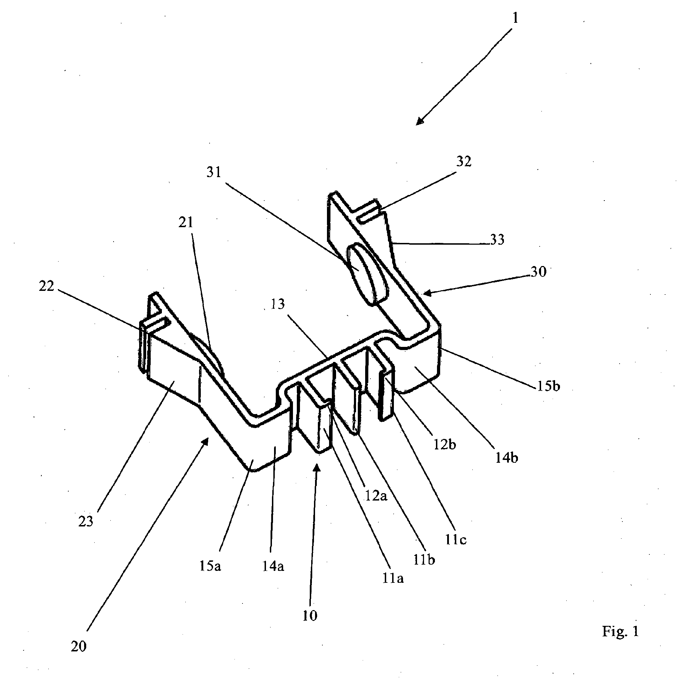

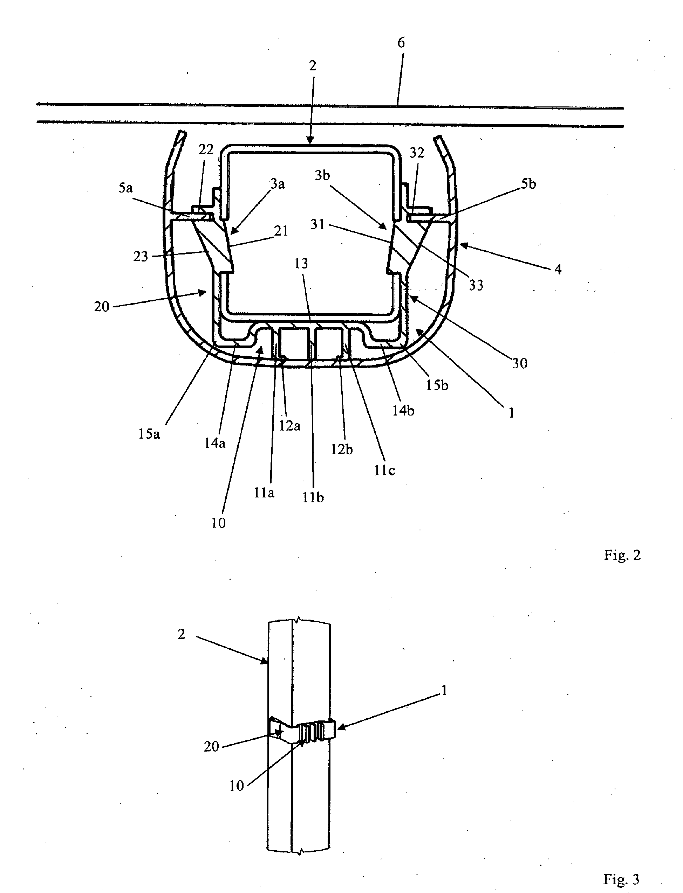

Figur 1 zeigt die Befestigungsvorrichtung 1 in perspektivischer Ansicht und Figur 2 die Befestigungsvorrichtung 1 in einer an einem Vier-Kant-Rohr 2 eingerasteten bzw. angebrachten Position in Schnittansicht, wobei in Figur 2 ebenfalls ein Verkleidungsabschnitt 4 dargestellt ist, der die Befestigungsvorrichtung 1 und den Träger 2 umgibt.

Figuren 1 und 2 zeigen die Befestigungsvorrichtung 1 mit den beiden Seitenabschnitten 20, 30 und dem Mittelabschnitt 10. Die Seitenabschnitte 20, 30 umfassen sowohl die Mittel zum Befestigen der Befestigungsvorrichtung 1 an dem Träger 2 in Form kreisrunder Rastnasen 21, 31 als auch Mittel zum Aufnehmen eines Anbau- oder Verkleidungsabschnitts 4 (siehe Figur 2), die durch Schlitze 22, 32 gebildet werden, in die ein Teil des Anbau- oder Verkleidungsabschnitts 4 über einen angeschrägten Abschnitt 23, 33 aufgeschoben wird. Ferner veranschaulicht Figur 1 die an dem Mittelabschnitt 10 angeordneten Mittel zum Aufnehmen mindestens eines Kabels in Form von drei Stegen 11a, 11b, 11c, die Zwischenräume aufweisen, die zur Kabelführung vorgesehen sind.

Der Mittelabschnitt 10 der Befestigungsvorrichtung 1 weist einen mittleren Bereich 13 und zwei an den mittleren Bereich radial angrenzende seitliche Bereiche 14a, 14b auf. Der mittlere Bereich 13 ist gegenüber den seitlichen Bereichen 14a, 14b nach hinten bzw. in Richtung des Trägers 2 versetzt. Der Versatz entspricht ca. der Hälfte der Tiefe der Stege 11a, 11b, 11c, die in dem mittleren Bereich 13 des Mittelabschnitts 10 angebracht sind. Dieser Versatz hat den Vorteil, dass die Stege 11a, 11b, 11c nicht vollkommen ungeschützt von der Befestigungsvorrichtung 1 abragen und durch Einwirkung von außen beschädigt werden können. Ferner sind die Ecken 15a, 15b, die den Mittelabschnitt 10 und die Seitenabschnitte 20, 30 verbinden, aufgrund des Versatzes exponiert positioniert, sodass die Ecken 15a, 15b besser als Auflagefläche für den die Befestigungsvorrichtung 1 umgebenden Verkleidungsabschnitt 4 dienen können, wie in Figur 2 dargestellt, wodurch eine bessere Stabilisierung des Verkleidungsabschnitts 4 in diesen Anlageflächen erreicht werden kann. Die freien Enden der Stege 11a,11b, 11c dienen auch als Auflagefläche für den Verkleidungsabschnitt 4 zur Stabilisierung des Verkleidungsabschnitts 4. Ferner ist der mittlere Bereich 13 flächig an dem Träger 2 angeordnet, wobei die seitlichen Bereiche 14a, 14b von dem Träger 2 beabstandet sind.

Die Stege 11a, 11b, 11c sind an der dem Träger abgewandten Fläche des Mittelabschnitts 10 angeordnet und erstrecken sich über die gesamte Höhe des Mittelabschnitts 10, von der unteren Kante bis zur oberen Kante. Ferner ragen alle drei Stege 11a, 11b, 11c im Wesentlichen orthogonal von dem mittleren Bereich 13 ab. Die beiden äußeren Stege 11a, 11c weisen an ihren freien Enden, welche nach außen gerichtet sind, jeweils einen abgewinkelten Fortsatz 12a, 12b auf, der jeweils zu dem mittleren Steg 11b hin gerichtet ist. Diese Fortsätze 12a, 12b sind dafür vorgesehen, dass das Kabel, das im Zwischenraum zwischen den jeweiligen Stegen 11a, 11b,11c geführt ist, in dem Zwischenraum gehalten wird.

An den jeweiligen Enden des Mittelabschnitts 10 erstrecken sich die Seitenabschnitte 20, 30, welche jeweils im Wesentlichen dieselbe Länge wie der Mittelabschnitt 10 aufweisen. Die Seitenabschnitte 20, 30 sind federnd nachgiebig ausgebildet. An den Innenflächen bzw. den dem Vier-Kant-Rohr 2 zugewandten Flächen der Seitenabschnitte 20, 30 sind jeweils kreisrunde Rastnasen 21, 31 ausgebildet, die zu den freien Enden der Seitenabschnitte 20, 30 abflachen, sodass der abgeflachte Bereich das Aufschieben der Befestigungsvorrichtung 1 auf den Träger 2 erleichtert. In eingerastetem Zustand bedecken die Seitenabschnitte 70%, 75% oder 80% der anliegenden Seitenflächen des Vier-Kant-Rohrs 2 im Bereich der Befestigungsvorrichtung 1, wie in Figur 2 visualisiert.

An den Außenflächenseiten bzw. den dem Träger 2 abgewandten Flächen der Seitenabschnitte 20, 30 sind die Mittel zum Aufnehmen des Verkleidungsabschnitts 4 angeordnet. Die Mittel umfassen einen angeschrägten Abschnitt 23, 33 in Form einer Rampe, der ungefähr in der Mitte des jeweiligen Seitenabschnitts 20, 30 beginnt und sich vom Mittelabschnitt 10 in Richtung des freien Endes des jeweiligen Seitenabschnitts 20, 30 hin erstreckt. Der Steigungswinkel zwischen der Außenfläche des Seitenabschnitts 20, 30, an dem der angeschrägte Abschnitt 23, 33 beginnt, und dem angeschrägten Abschnitt 23, 33 beträgt 20°, 25°, 30°, 40° oder 45°. Dieser angeschrägte Abschnitt 23, 33 ist der innenliegenden Rastnase 21, 31 gegenüberliegend angeordnet. Der angeschrägte Abschnitt 23, 33 geht in eine Aufnahme in Form eines Schlitzes 22, 32 über, welcher zum Aufnehmen eines Einsteckabschnitts 5a, 5b des die Befestigungsvorrichtung umgebenden Verkleidungsabschnitts 4 vorgesehen ist. Der Schlitz 22, 32 ist orthogonal zur Außenfläche des jeweiligen Seitenabschnitts 20, 30 angeordnet und erstreckt sich entlang der Höhe der Befestigungsvorrichtung 1. Der Einsteckabschnitt 5a, 5b ragt im Wesentlichen orthogonal von dem Verkleidungsabschnitt 4 ab und korrespondiert mit dem Schlitz 22, 32.

Beim Aufschieben des Verkleidungsabschnitts 4 auf die an dem Träger 2 verrastete Befestigungsvorrichtung 1 gleiten die Einsteckabschnitte 5a, 5b über die angeschrägten Flächen 23, 33 der Seitenabschnitte 20, 30, wodurch sich der u-förmige Verkleidungsabschnitt 4 seitlich aufspreizt bis der Einsteckabschnitt 5a, 5b in den Schlitzen 22, 32 der Befestigungsvorrichtung 1 einrastet. Dadurch erhält der Monteur eine akustische Rückmeldung, welche ihm bestätigt, dass der Verkleidungsabschnitt 4 sicher an der Befestigungsvorrichtung 1 angebracht ist.

Der Verkleidungsabschnitt 4 ist im Wesentlichen u-förmig ausgebildet und umfasst den Träger 2 und die Befestigungsvorrichtung 1 derart, dass lediglich eine Seitenfläche des Trägers vorhanden ist, die nicht von der Befestigungsvorrichtung 1 umfasst wird. Die beiden Ecken des Verkleidungsabschnitts 2 sind stark abgerundet, so dass die Verkleidung eine säulenähnliche Form aufweist.

Die von dem Verkleidungsabschnitt 4 und der Befestigungsvorrichtung 1 nicht umfasste Seitenfläche des Trägers 2 weist zu einer Fensterfront oder Fensterscheibe 6, die zum Beispiel von einem Bus stammt und den Innenbereich von dem Außenbereich des Busses trennt, wie in Figur 2 dargestellt.

Das Vier-Kant-Rohr 2 ist im Wesentlichen quadratisch ausgebildet und weist Löcher 3a, 3b auf, die vor dem Beschichtungsverfahren der kathodischen Tauchlackierung (KTL) an dem Träger 2 angebracht worden sind. Dieses Verfahren dient dem Korrosionsschutz. Durch das Ausnutzen der bereits vorhandenen Löcher 3a, 3b, kann das Stanzen oder Lasern neuer Löcher entfallen. Der Träger 2 ist ein Teil eines Karosseriegerippes eines Busses.

In Figur 3 ist der Träger 2 mit der Befestigungsvorrichtung 1 in perspektivischer Ansicht dargestellt. Die Löcher 3a, 3b des Trägers sind von den Seitenabschnitten 20, 30 der Befestigungsvorrichtung 1 abgedeckt. Im Mittelabschnitt 10 werden Kabel entlang des Trägers geführt.

## Patentansprüche

1. Befestigungsvorrichtung mit
einem Mittelabschnitt (10) und
zwei Seitenabschnitten (20, 30), die sich jeweils von den Enden des Mittelabschnitts (10) erstrecken und dazu ausgebildet sind, einen Träger (2), an dem die Befestigungsvorrichtung anbringbar ist, zumindest teilweise zu umfassen,
wobei die Befestigungsvorrichtung umfasst:
Mittel zum Befestigen der Befestigungsvorrichtung an dem Träger (2),
Mittel zum Aufnehmen mindestens eines Anbau- oder Verkleidungsabschnitts (4), der die Befestigungsvorrichtung zumindest teilweise umgibt, die eine Aufnahme (22, 32) aufweisen, die an der nach außen gerichteten Fläche an jedem der Seitenabschnitte (20, 30) angeordnet ist, und
Mittel zum Aufnehmen mindestens eines Kabels, das an dem Träger (2) geführt wird,
**dadurch gekennzeichnet, dass**
die Aufnahme (22, 32) im Wesentlichen orthogonal zur jeweiligen nach außen gerichteten Fläche der Seitenabschnitte (20, 30) angeordnet ist und einen Teil des Anbau- oder Verkleidungsabschnitts (4) aufnehmen kann, um diesen an der Befestigungsvorrichtung zu fixieren.

2. Befestigungsvorrichtung nach dem vorangehenden Anspruch, wobei die Mittel zum Befestigen der Befestigungsvorrichtung an dem Träger (2) eine Rast- oder Schnappvorrichtung aufweisen.

3. Befestigungsvorrichtung nach dem vorangehenden Anspruch, wobei die Rast- oder Schnappvorrichtung an den Seitenabschnitten (20, 30), insbesondere an den sich gegenüberliegenden Flächen der Seitenabschnitte (20, 30) angeordnet sind.

4. Befestigungsvorrichtung nach einem der beiden vorangehenden Ansprüche, wobei die Rast- oder Schnappvorrichtung eine kreisrunde Rastnase (21, 31) aufweist.

5. Befestigungsvorrichtung nach einem der Ansprüche 2 bis 4, wobei die Seitenabschnitte (20, 30) federnd nachgiebig ausgebildet sind, um eine für die Rast- oder Schnappverbindung benötigte Spannkraft erzeugen zu können.

6. Befestigungsvorrichtung nach einem der vorangehenden Ansprüche, wobei die Mittel zum Aufnehmen mindestens eines Kabels an dem Mittelabschnitt (10) der Befestigungsvorrichtung angeordnet sind und mindestens zwei Stege (11a, 11b, 11c) aufweisen, die zum Führen des Kabels eingerichtet sind.

7. Befestigungsvorrichtung nach dem vorangehenden Anspruch, wobei die Stege (11a, 11b, 11c) an der nach außen gerichteten Fläche des Mittelabschnitts (10) angeordnet sind.

8. Befestigungsvorrichtung nach einem der vorangehenden Ansprüche, wobei der Mittelabschnitt (10) und/oder die Seitenabschnitte (20, 30) der Befestigungsvorrichtung zumindest teilweise an dem Träger (2) flächig anliegen.

9. Befestigungsvorrichtung nach einem der vorangehenden Ansprüche, wobei zumindest ein Abschnitt der Befestigungsvorrichtung als Stütze für einen die Befestigungsvorrichtung umgebenen Anbau- oder Verkleidungsabschnitt (4) dient.

10. System umfassend eine Befestigungsvorrichtung nach einem der vorangehenden Ansprüche und einen Träger (2), an dem die Befestigungsvorrichtung mittels Rast- oder Schnappverbindung anbringbar ist.

11. System nach dem vorangehenden Anspruch, wobei die Rast- oder Schnappverbindung eine Rastnase (21, 31) aufweist, die in ein vorhandenes Loch (3a, 3b) oder eine Hinterschneidung des Trägers (2) einrastbar oder einschnappbar ist, um die Befestigungsvorrichtung an dem Träger (2) zu befestigen.

12. System nach einem der Ansprüche 10 oder 11, wobei der Träger (2) ein Vier-Kant-Rohr ist, welches teilweise von der Befestigungsvorrichtung umfasst ist.

## Claims

1. An attachment device, with
a central section (10) and
two side sections (20, 30) which extend in each case from the ends of the central section (10) and are designed to at least partially enclose a support (2) on which the attachment device can be fatted,
wherein the attachment device comprises:
means for attaching the attachment device to the support (2),
means for receiving at least one add-on or panelling section (4)
which at least partially surrounds the attachment device, staid means having a receptacle (22, 32)which is arranged on the outwardly directed surface on each of the side sections (20, 30), and
means for receiving at least one cable which is guided on the support (2),
**characterized in that** the receptacle (22, 32) is arranged substantially orthogonally to the respective outwardly directed surface of the side sections (20, 30) and can receive a part of the add-on or panelling section (4) in order to fix the latter to the attachment device.

2. The attachment device according to the preceding claim, wherein the means for attaching the attachment device to the support (2) has a latching or snap-action device.

3. The attachment device according to the preceding claim, wherein the latching or snap-action device are arranged on the side sections (20, 30), in particular on the opposite surfaces of the side sections (20, 30).

4. The attachment device according to one of the two preceding claims, wherein the latching or snap-action device has a circular latching lug (21, 31).

5. The attachment device according to one of Clams 2 to 4, wherein the side sections (20, 30) are of resiliently flexible design in order to be able to produce a tensioning force required for the latching or snap-action connection.

6. The attachment device according to one of the preceding claims, wherein the means for receiving at least one cable are arranged on the central section (10) of the attachment device and have at least two webs (11a, 11b, 11c) which are designed for guiding the cable.

7. The attachment device according to the preceding claim, wherein the webs (11a, 11b, 11c) are arranged on the outwardly directed surface of the central section (10).

8. The attachment device according to one of the preceding claims, wherein the central section (10) and/or the side sections (20, 30) of the attachment device at least partially bear flat against the support (2).

9. The attachment device according to one of the preceding claims, wherein at least one section of the attachment device serves as support for an add-on or panelling section (4) surrounding the attachment device.

10. A system comprising an attachment device according to one of the preceding claims and a support (2) on which the attachment device can be fitted by means of a latching or snap-action connection.

11. The system according to the preceding claim, wherein the latching or snap-action connection has a latching lug (21, 31) which is latchable or snappable into an existing hole (3a, 3b) or an undercut of the support (2) in order to attach the attachment device to the support (2).

12. The system according to either of Claims 10 and 11, wherein the support (2) is a square tube which is partially enclosed by the attachment device.

## Revendications

1. Dispositif de fixation comprenant
une portion centrale (10) et
deux portions latérales (20, 30) qui s'étendent à chaque fois depuis les extrémités de la portion centrale (10) et qui sont réalisées de manière à enserrer au moins en partie un support (2) sur lequel peut être monté le dispositif de fixation, le dispositif de fixation comprenant :
des moyens pour fixer le dispositif de fixation sur le support (2),
des moyens pour recevoir au moins une portion de montage rapporté ou d'habillage (4) qui entoure au moins en partie le dispositif de fixation, qui présentent un logement (22, 32) qui est disposé au niveau de la surface orientée vers l'extérieur sur chacune des portions latérales (20, 30), et
des moyens pour recevoir au moins un cable qui est guidé sur le support (2),
**caractérisé en ce que**
le logement (22, 32) est disposé essentiellement perpendiculairement à la surface respective des portions latérales (20, 30) orientée vers l'extérieur et peut recevoir une partie de la portion de montage rapporté ou d'habillage (4) afin de fixer celle-ci au dispositif de fixation.

2. Dispositif de fixation selon la revendication précédente, dans lequel les moyens pour fixer le dispositif de fixation sur le support (2) présentent un dispositif d'encliquetage ou d'emboîtement.

3. Dispositif de fixation selon la revendication précédente, dans lequel le Dispositif d'encliquetage ou d'emboîtement est disposé au niveau des portions latérales (20, 30), en particulier au niveau des surfaces des portions latérales (20, 30) opposées l'une à l'autre.

4. Dispositif de fixation selon l'une quelconque des deux revendications précédentes, dans lequel le dispositif d'encliquetage ou d'emboîtement présente un ergot d'encliquetage rond circulaire (21, 31).

5. Dispositif de fixation selon l'une quelconque des revendications 2 à 4, dans lequel les portions latérales (20, 30) sont réalisées de manière élastiquement flexible afin de pouvoir produire une force de serrage nécessaire pour la connexion par encliquetage ou par emboîtement.

6. Dispositif de fixation selon l'une quelconque des revendications précédentes, dans lequel les moyens pour recevoir au moins un câble sont disposés sur la portion centrale (10) du dispositif de fixation et présentent au moins deux nervures (11a, 11b, 11c) qui sont prévues pour guider le câble.

7. Dispositif de fixation selon la revendication précédente, dans lequel les nervures (11a, 11b, 11c) sont disposées au niveau de la surface de la portion centrale (10) orientée vers l'extérieur.

8. Dispositif de fixation selon l'une quelconque des revendications précédentes, dans lequel la portion centrale (10) et/ou les portions latérales (20, 30) du dispositif de fixation s'appliquent an moins en partie à plat contre le support (2).

9. Dispositif de fixation selon l'une quelconque des revendications précédentes, dans lequel au moins une portion du dispositif de fixation sert d'appui pour une portion de montage rapporté ou d'habillage (4) entourant le dispositif de fixation.

10. Système comprenant un dispositif de fixation selon l'une quelconque des revendications précédentes et un support (2) sur lequel peut être monté le dispositif de fixation au moyen d'une connexion par encliquetage ou par emboîtement.

11. Système selon la revendication précédente, dans lequel la connexion par encliquetage ou par emboîtement présente un ergot d'encliquetage (21, 31) qui peut être encliqueté ou emboîté dans un trou existant (3a, 3b) ou une contre-dépouille du support (2) afin de fixer le dispositif de fixation sur le support (2).

12. Système selon l'une quelconque des revendications 10 ou 11, dans lequel le support (2) est un tube à quatre pans qui est en partie enserré par le dispositif de fixation.
